# EUROPÄISCHE PATENTSCHRIFT

(11) **EP 0 916 037 B1**
(45) Veröffentlichungstag und Bekanntmachung des Hinweises auf die Patenterteilung: **25.09.2002**
(21) Anmeldenummer: 97924890.3
(22) Anmeldetag: 16.05.1997
(51) Int. Cl.: F16D 65/21

(54) **ELEKTROMECHANISCH BETÄTIGBARE BREMSE**
ELECTROMECHANICAL BRAKE
FREIN A ACTIONNEMENT ELECTROMECANIQUE

(30) Priorität: 05.08.1996 DE 19631592
(43) Veröffentlichungstag der Anmeldung: 19.05.1999
(73) Patentinhaber: ROBERT BOSCH GMBH, 70442 Stuttgart (DE)
(72) Erfinder: SCHAFFER, Wolfram, D-71679 Asperg (DE)
(86) Internationale Anmeldenummer: DE9700990
(87) Internationale Veröffentlichungsnummer: WO98005881

(56) Entgegenhaltungen:
- WO-A-89/10495
- WO-A-96/03301

## Beschreibung

### Stand der Technik

Die Erfindung betrifft eine elektromechanisch betätigbare Bremse gemäß dem Oberbegriff des Anspruchs 1.

Eine derartige Bremse ist bekannt aus der WO 96/033 01. Zum Andrücken eines Bremsbelags an einen rotierenden Bremskörper (Bremsscheibe, Bremstrommel oder dgl.) weist die bekannte Bremse eine Betätigungseinrichtung mit einem Rollengewindetrieb auf, der von einem Elektromotor antreibbar ist. Sowohl Zuspannen als auch Lösen der bekannten Bremse werden mit dem Elektromotor bewerkstelligt. Um zu verhindern, daß im Fehlerfall, beispielsweise bei einem Ausfall einer Steuerelektronik der Bremse während einer Bremsung, durch Hysterese der Betätigungseinheit verursachte Restbremsmomente am Bremskörper wirken, ist bei einer Ausgestaltung der bekannten Bremse eine vorzugsweise spiralförmige Rückstellfeder vorgesehen, die an der Betätigungseinheit angreift und diese zusammen mit dem Elektromotor rotierend in Löserichtung antreibt, so daß der Bremsbelag vom Bremskörper abgehoben wird.

Diese Bremse hat den Nachteil, daß beim Bremskraftaufbau zusätzlich die Kraft die Rückstellfeder überwunden werden muß, wozu der Elektromotor entsprechend größer dimensioniert und stärker bestromt werden muß. Hinzu kommt ein Dynamikverlust und die Verschlechterung des Wirkungsgrades.

Weiterer Nachteil ist, daß zum Konstanthalten einer aufgebauten Bremskraft der Elektromotor so stark bestromt werden muß, daß er den Bremsbelag gegen die Kraft der Rückstellfeder mit konstanter Andruckkraft am Bremskörper angedrückt hält, was thermische Probleme mit sich bringt. Hinzu kommt, daß die bekannte Bremse sich nicht als Feststellbremse verwenden läßt, da sie sich löst, wenn sie unbestromt ist.

Weiterer Nachteil ist, daß sich ein Lüftspiel, also ein Abstand zwischen Bremsbelag und Bremskörper bei gelöster Bremse, mit zunehmender Abnutzung der Bremsbeläge vergrößert. Dadurch wird zum einen ein Zustellweg des Bremsbelags bis zur Anlage am Bremskörper größer, es dauert also länger, bis die Bremse greift. Der Dynamikverlust vergrößert sich zusätzlich. Des weiteren vergrößert sich die zur Überwindung der Kraft der Rückstellfeder notwendige Kraft, da die Rückstellfeder stärker verformt wird. Die zur Verformung der Rückstellfeder vom Elektromotor der Betätigungseinrichtung aufzubringende Energie entspricht dem Produkt aus Verformungsweg und Verformungskraft, steigt also mit zunehmendem Lüftspiel zumindest quadratisch an, was den Wirkungsgrad der Bremse bei Abnutzung der Bremsbeläge ganz erheblich verschlechtert.

### Vorteile der Erfindung

Die erfindungsgemäße, elektromechanisch betätigbare Bremse mit den Merkmalen des Anspruchs 1 weist eine lösbare Abstützung ihrer Betätigungseinrichtung auf. Gegen diese Abstützung stützt sich die Betätigungseinrichtung beim Betätigen der Bremse, also zum Andrücken des Bremsbelags an den Bremskörper, ab. Beim Bremsen und auch beim Lösen der Bremse wirkt die Abstützung lediglich als unbewegliches Widerlager, hat ansonsten aber keine Funktion, die Bremse wird mit ihrer Betätigungseinrichtung betätigt und auch wieder gelöst. Die Abstützung beeinflußt also weder die Betätigungseinrichtung selbst noch deren Wirkungsgrad.

Läßt sich im Fehlerfall, beispielsweise bei Ausfall der Stromversorgung des Elektromotors oder seiner Steuerelektronik, die Bremse nicht mit der Betätigungseinrichtung lösen, wird die Abstützung gelöst, so daß sich die Betätigungseinrichtung mitsamt des Bremsbelags vom Bremskörper löst. Mit anderen Worten, es wird die als Widerlager der Betätigungseinrichtung dienende Abstützung entfernt oder zumindest ihr Abstand vom Bremskörper vergrößert. Die Erfindung hat den Vorteil, daß ihre Abstützung die Funktion der Betätigungseinrichtung nicht beeinflußt und deren Wirkungsgrad nicht verschlechtert. Dabei wird verhindert, daß im Fehlerfall ein Restbremsmoment wirkt und sichergestellt, daß die Bremse vollständig gelöst ist.

### Zeichnung

Die Erfindung wird nachfolgend anhand eines in der Zeichnung dargestellten Ausführungsbeispiels näher erläutert. Es zeigen:

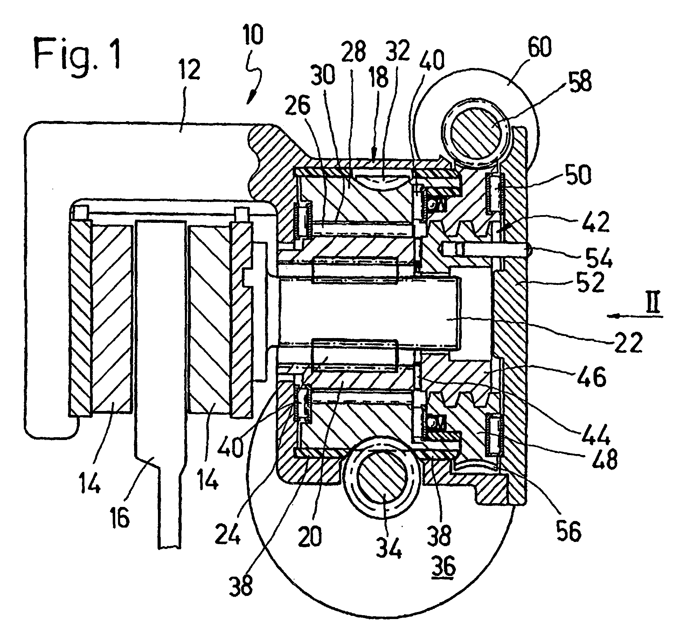

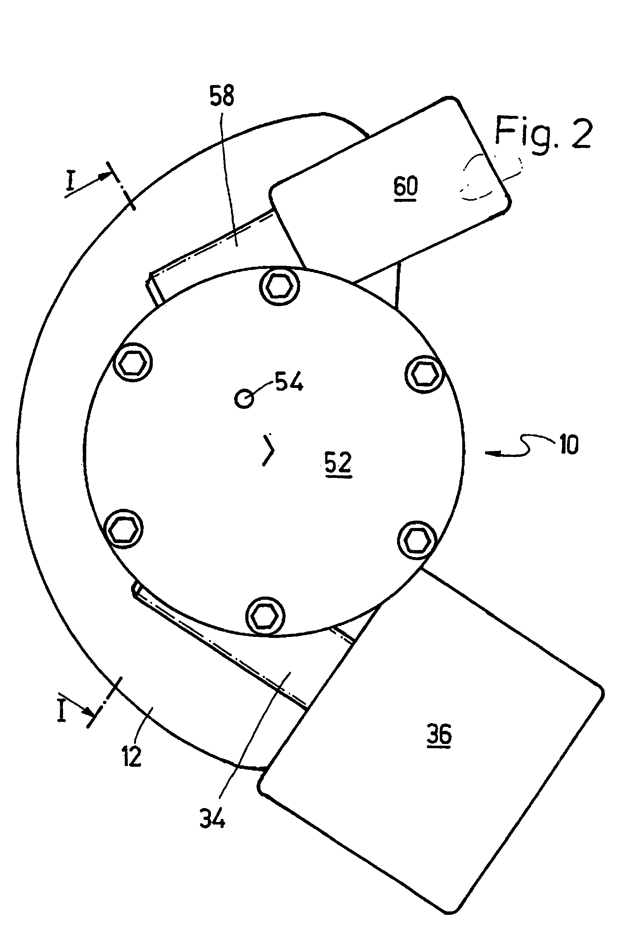

Figur 1 einen Schnitt durch eine erfindungsgemäße Bremse entlang Linie I-I in Figur 2, und
Figur 2 eine Ansicht der Bremse gemäß Pfeil II in Figur 1.

### Beschreibung des Ausführungsbeispiels

Die in der Zeichnung dargestellte, erfindungsgemäße Bremse ist als Scheibenbremse 10 mit einem sog. Schwimm- oder Faustsattel 12 ausgebildet, in dem zwei Bremsbeläge 14 beiderseits einer zwischen ihnen rotierbaren Bremsscheibe 16 angeordnet sind.

Als Betätigungseinrichtung weist die Scheibenbremse 10 einen Spindeltrieb, und zwar wegen des guten Wirkungsgrades einen Rollengewindetrieb 18 auf. Dieser umfaßt eine Mutter 20, welche eine Spindel 22 koaxial umgibt. In einem zylindrischen Zwischenraum zwischen Mutter 20 und Spindel 22 sind über den Umfang verteilt Gewinderollen 24 angeordnet, deren Gewinde sowohl in das Mutterngewinde als auch in das Spindelgewinde eingreifen. Bei rotierendem Antrieb der Mutter 20 laufen die Gewinderollen 24 wie die Planetenräder eines Planetengetriebes um die Spindel 22 um und bewirken eine Axialbewegung der Spindel 22. An einem Stirnende der Spindel 22 ist einer der beiden Bremsbeläge 14 verdrehsicher angeordnet, er läßt sich zum Aufbringen einer Bremskraft durch rotierenden Antrieb der Mutter 20 gegen eine Seite der Bremsscheibe 16 drücken. Der andere der beiden Bremsbeläge 14 wird dabei in an sich bekannter Weise infolge der Reaktionskraft vom Bremssattel 12 gegen die andere Seite der Bremsscheibe 16 gedrückt. Zum Lösen der Bremse 10 wird die Mutter 20 des Rollengewindetriebs 18 in entgegengesetzter Richtung rotierend angetrieben.

Zum rotierenden Antrieb weist die Mutter 20 eine Keilwellenverzahnung 26 auf, auf die als Übertragungselement eine Muffe 28 aufgeschoben ist, die ein zum Keilwellenprofil 26 der Mutter 20 komplementäres Nutprofil 30 in ihrer Bohrung aufweist. Die Mutter 20 ist also axial verschieblich und drehfest mit der Muffe 28 verbunden.

Auf ihrem Außenumfang ist die Muffe 28 mit einer umlaufenden Verzahnung 32 versehen, in die eine Gewindeschnecke 34 eines Elektro-Betätigungsmotors 36 eingreift. Mit dem Betätigungsmotor 36 ist über die Muffe 28 die Mutter 20 des Gewinderollentriebs 18 rotierend antreibbar und somit die erfindungsgemäße Scheibenbremse 10 betätig- und lösbar.

Die Muffe 28 ist mit zwei Verbundstoff-Radialgleitlagern 38 sowie zwei Axial-Nadellagern 40 im Bremssattel 12 drehbar gelagert.

Zum Lösen der erfindungsgemäßen Bremse 10 im Fehlerfall, also beispielsweise bei Ausfall des Betätigungsmotors 36, seiner Stromversorgung oder eines nicht dargestellten, elektronischen Bremsensteuergeräts, weist die erfindungsgemäße Bremse 10 eine lösbare Abstützung 42 auf, gegen die sich die Mutter 20 des Rollengewindetriebs 18 zum Andrücken der Bremsbeläge 14 an die Bremsscheibe 16 in axialer Richtung über ein Nadel-Axiallager 44 drehbar abstützt. Die Abstützung 42 bildet eine Art Widerlager für den die Betätigungseinrichtung bildenden Rollengewindetrieb 18, das den Rollengewindetrieb 18 an einer der Bremsscheibe 16 abgewandten Seite der Mutter 20 in einem bestimmten Abstand zur Bremsscheibe 16 hält. Im Fehlerfall läßt sich dieser Abstand durch Lösen der Abstützung 42 vergrößern, so daß die Bremsbeläge 14 nicht mehr an der Bremsscheibe 16 anliegen.

Im Ausführungsbeispiel weist die lösbare Abstützung 42 einen Spindeltrieb mit einer Trapezgewindehohlspindel 46 auf, auf die eine Trapezmutter 48 aufgeschraubt ist. Die Mutter 20 des Rollengewindetriebs 18 der Betätigungseinrichtung stützt sich über das Nadel-Axiallager 44 gegen die Trapezgewindehohlspindel 46 ab. Die Trapezmutter 48 stützt sich über ein weiteres Nadel-Axiallager 50 an einem Deckel 52 ab, der mit dem Bremssattel 12 verschraubt ist. Die Trapezgewindehohlspindel 46 ist hohl ausgebildet, um ein rückwärtiges, der Bremsscheibe 16 abgewandtes Ende der Spindel 22 des Rollengewindetriebs 18 der Betätigungseinrichtung aufnehmen zu können. Mittels eines Zylinderstifts 54, der exzentrisch und achsparallel mit einer Preßpassung in den Deckel 52 eingesetzt ist und mit einer Spielpassung in ein Sackloch der Trapzegewindehohlspindel 46 eingreift, ist letztere verdrehgesichert.

Die Trapezmutter 48 weist eine Außenverzahnung 56 auf, mit der eine Schnecke 58 eines zweiten Elektromotors 60 in Eingriff steht. Der zweite Elektromotor 60 ist an eine eigene Stromversorgung angeschlossen, die von der Stromversorgung des Betätigungsmotors 36 unabhängig ist.

Mit dem zweiten Elektromotor 60 läßt sich die Trapezmutter 48 rotierend antreiben und auf diese Weise die Abstützung 42 lösen, d. h. die Trapezgewindehohlspindel 46 wird in axialer Richtung von der Bremsscheibe 16 wegbewegt. Mit ihr zusammen bewegt sich der gesamte Rollengewindetrieb 18 der Betätigungseinrichtung, dessen Mutter 20 sich in axialer Richtung gegen die Trapezgewindehohlspindel 46 abstützt und die durch die Keilwellenverzahnung 26, 30 in der Muffe 28 axial verschieblich ist, von der Bremsscheibe 16 weg, so daß die Bremsbeläge 14 von der Bremsscheibe 16 abgehoben werden und die erfindungsgemäße Bremse 10 gelöst ist.

Die Verwendung eines Gewindetriebs 46, 48 als lösbare Abstützeinrichtung 42 hat den Vorteil, daß die Bremsbeläge 14 im Fehlerfall der Betätigungseinrichtung 18 von der Bremsscheibe 16 abhebbar sind, also nicht infolge einer Hysterese bei gelöster Abstützung 42 noch an der Bremsscheibe 16 anliegen und ein Restbremsmoment verursachen.

## Patentansprüche

1. Elektromechanisch betätigbare Bremse mit einer einen elektrischen Betätigungsmotor aufweisenden Betätigungseinrichtung, mit der ein Bremsbelag an einen zu bremsenden Bremskörper andrückbar und wieder von ihm abhebbar ist, **dadurch gekennzeichnet, daß** sie eine lösbare Abstützung (42) aufweist, gegen die sich die Betätigungseinrichtung (18) beim Andrücken des Bremsbelags (14) an den Bremskörper (16) abstützt, wobei der angedrückte Bremsbelag (14) durch Lösen der Abstützung (42) vom Bremskörper (16) lösbar ist.

2. Bremse nach Anspruch 1, **dadurch gekennzeichnet, daß** die Betätigungseinrichtung einen Spindeltrieb (18) aufweist, dessen Mutter (20) drehfest und axialverschieblich mit einem übertragungselement (28) verbunden ist, das mit dem Betätigungsmotor (36) rotierend antreibbar ist.

3. Bremse nach Anspruch 2, **dadurch gekennzeichnet, daß** der Spindeltrieb ein Rollengewindetrieb (18) ist.

4. Bremse nach Anspruch 2 oder 3, **dadurch gekennzeichnet, daß** die lösbare Abstützung (42) einen zweiten Spindeltrieb (46, 48) aufweist, an dem sich die Betätigungseinrichtung (18) abstützt und mit dem der angedrückte Bremsbelag (14) mitsamt der Betätigungseinrichtung (18) vom Bremskörper (16) lösbar ist.

5. Bremse nach Anspruch 4, **dadurch gekennzeichnet, daß** die lösbare Abstützung (42) einen zweiten Elektromotor (60) aufweist.

6. Bremse nach Anspruch 5, **dadurch gekennzeichnet, daß** die beiden Elektromotoren (36, 60) an zwei voneinander unabhängige Stromversorgungen angeschlossen sind.

7. Bremse nach einem der vorhergehenden Ansprüche, **dadurch gekennzeichnet, daß** die Bremse eine Schwimmsattel-Scheibenbremse (10) ist.

## Claims

1. Electromechanically actuable brake, with an actuating device which has an electric actuating motor and by means of which a brake lining can be pressed onto a brake body to be braked and can be lifted off from it again, **characterized in that** it has a releasable support (42), against which the actuating device (18) is supported when the brake lining (14) is pressed onto the brake body (16), the pressed-on brake lining (14) being releasable from the brake body (16) by the release of the support (42).

2. Brake according to Claim 1, **characterized in that** the actuating device has a spindle mechanism (18), the nut (20) of which is connected fixedly in terms of rotation and axially displaceably to a transmission element (28) which can be driven in rotation by means of the actuating motor (36).

3. Brake according to Claim 2, **characterized in that** the spindle mechanism is a roller-thread mechanism (18).

4. Brake according to Claim 2 or 3, **characterized in that** the releasable support (42) has a second spindle mechanism (46, 48), on which the actuating device (18) is supported and by means of which the pressed-on brake lining (14), together with the actuating device (18), can be released from the brake body (16).

5. Brake according to Claim 4, **characterized in that** the releasable support (42) has a second electric motor (60).

6. Brake according to Claim 5, **characterized in that** the two electric motors (36, 60) are connected to two power supplies independent of one another.

7. Brake according to one of the preceding claims, **characterized in that** the brake is a floating-caliper disc brake (10).

## Revendications

1. Frein à commande électromécanique comprenant un moteur d'actionnement électrique et une installation d'actionnement qui presse une garniture de frein contre un élément de frein à freiner et le dégage de nouveau de cet élément,
**caractérisé en ce qu'**
il comporte un appui amovible (42) contre lequel l'installation d'actionnement (18) s'appuie pour presser la garniture (14) contre l'élément de frein (16), la garniture (14) mise en appui pouvant être desserrée de l'élément de frein (16) par libération de l'appui (42).

2. Frein selon la revendication 1,
**caractérisé en ce que**
l'installation d'actionnement comporte un entraînement à vis (18) dont l'écrou (20) est relié solidairement en rotation et mobile axialement avec un élément de transmission (28) entraîné en rotation par le moteur d'actionnement (36).

3. Frein selon la revendication 2,
**caractérisé en ce que**
l'entraînement à vis est un entraînement à galets (18).

4. Frein selon l'une quelconque des revendications 2 ou 3,
**caractérisé en ce que**
l'appui amovible (42) comporte une seconde vis d'entraînement (46, 48) contre laquelle s'appuie l'installation d'actionnement (18) et qui permet de dégager par rapport à l'élément de frein (16), la garniture de frein (14) mise en appui avec l'installation d'actionnement (18).

5. Frein selon la revendication 4,
**caractérisé en ce que**
l'appui amovible (42) comporte un second moteur électrique (60).

6. Frein selon la revendication 5,
**caractérisé en ce que**
les deux moteurs électriques (36, 60) sont reliés à deux alimentations électriques indépendantes l'une de l'autre.

7. Frein selon l'une quelconque des revendications précédentes,
**caractérisé en ce que**
le frein est un frein à disque (10) à étrier flottant.
